# FASCICULE DE BREVET EUROPEEN

(11) **EP 1 987 238 B1**
(45) Date de publication et mention de la délivrance du brevet: **18.05.2011**
(21) Numéro de dépôt: 07731558.8
(22) Date de dépôt: 01.02.2007
(51) Int. Cl.: F01N 3/025, F02D 41/02, F01N 3/20

(54) **PROCEDE ET DISPOSITIF DE REGENERATION DU FILTRE A PARTICULES D'UN MOTEUR A COMBUSTION INTERNE DU TYPE DIESEL, PENDANT LES PHASES DE RALENTI**
VERFAHREN UND VORRICHTUNG ZUR WIEDERHERSTELLUNG DES PARTIKELFILTERS EINES DIESEL-VERBRENNUNGSMOTORS WÄHREND LEERLAUF-PHASEN
METHOD AND DEVICE FOR REGENERATING THE PARTICLE FILTER OF A DIESEL-TYPE INTERNAL COMBUSTION ENGINE DURING THE IDLING PHASES

(30) Priorité: 20.02.2006 FR 0601457
(43) Date de publication de la demande: 05.11.2008
(73) Titulaire: Renault s.a.s., 92100 Boulogne Billancourt (FR)
(72) Inventeur: DANEAU, Marc, F-92100 Boulogne Billancourt (FR)
(86) Numéro de dépôt international: PCT/FR2007/050730
(87) Numéro de publication internationale: WO 2007/096541

(56) Documents cités:
- EP-A- 1 176 298
- DE-A1- 4 117 676
- DE-A1- 4 340 742
- FR-A- 2 831 923
- JP-A- 9 317 440
- US-A1- 2004 124 259

## Description

La présente invention concerne un procédé et un dispositif de régénération du filtre à particules placé sur la ligne d'échappement d'un moteur à combustion interne du type diesel.

En raison des normes de dépollution de plus en plus exigeantes, les filtres à particules se généralisent sur les véhicules automobiles. Ces filtres à particules permettent de filtrer les gaz d'échappement des moteurs à combustion interne et retiennent les particules nocives. Il est nécessaire de régénérer ces filtres à particules à intervalle régulier afin d'éviter qu'ils se colmatent et empêchent un fonctionnement correct du moteur.

Une solution connue pour effectuer la régénération décrite notamment dans l'US 20041204818 A1 consiste à disposer un injecteur de gasole directement sur la ligne d'échappement. Lors de la régénération cet injecteur injecte du gasole dans la ligne d'échappement. Le gasole réagit dans un catalyseur d'oxydation et produit de la chaleur. Cette chaleur permet de chauffer le filtre à particules à une température de l'ordre de 650°C permettant la combustion des particules retenues dans le filtre.

Dans le dispositif décrit dans ce document le catalyseur d'oxydation est disposé en amont du filtre à particules et l'injecteur de gasole est placé en amont du catalyseur d'oxydation.

Le processus de régénération du filtre à particules, c'est-à-dire l'injection de gasole dans la ligne d'échappement, est déclenché lorsque la perte de charge provoquée par la présence des particules dans le filtre atteint un certain seuil. Cette perte de charge est mesurée au moyen de capteurs de pression placés en amont et en aval du filtre à particules.

Dans la réalisation décrite dans la demande de brevet FR0453187 du 23 décembre 2004, le dispositif de dépollution comprend deux catalyseurs d'oxydation, le premier étant situé près du moteur à combustion interne et le second près du filtre à particules.

La mise en oeuvre pratique de cette solution se heurte cependant à des contraintes liées au volume disponible dans le véhicule. En outre, les véhicules ne sont pas toujours prédisposés à recevoir des systèmes volumineux de post-traitement des gaz d'échappement parce que leur conception est relativement ancienne par rapport à la date d'entrée en vigueur de la norme de dépollution.

Généralement, le premier catalyseur d'oxydation est implanté dans le compartiment moteur immédiatement en aval du turbocompresseur. Le second catalyseur d'oxydation et le filtre à particules sont implantés sous le plancher du véhicule car il ne reste pas suffisamment de place dans le compartiment moteur. La place disponible sous le plancher pour recevoir ce catalyseur et le filtre est aussi limitée.

La mise en oeuvre de la solution décrite ci-dessus aboutit à la situation indésirable ci-après. Lorsque le moteur à combustion interne reste pendant une période prolongée au ralenti, par exemple dans les embouteillages, lors de la régénération du filtre à particules, le carburant, c'est-à-dire le gasole, injecté par l'injecteur dans la ligne d'échappement peut se condenser, c'est-à-dire s'accumuler sous forme liquide en amont du filtre à particules ou dans ce dernier. De ce fait, lors de l'accélération du véhicule, des fumées blanches mal odorantes peuvent s'échapper de l'échappement. Celles-ci sont dues à l'évacuation du carburant liquide par l'augmentation brutale du débit des gaz d'échappement.

Le carburant ci-dessus n'est pas transformé en chaleur par le catalyseur d'oxydation :
1) parce qu'il est en quantité trop importante. Lorsque la concentration en carburant des gaz d'échappement en amont du catalyseur d'oxydation dépasse un certain niveau, ce catalyseur n'est en effet plus en mesure de transformer le carburant en chaleur.
2) parce que le débit des gaz d'échappement est trop élevé par rapport au volume du catalyseur d'oxydation, il existe en effet un seuil de débit volumique des gaz au-delà duquel, pour un volume donné, un catalyseur d'oxydation n'est plus en mesure de traiter la totalité des hydrocarbures du carburant injecté en amont du catalyseur.

On connaît par ailleurs du document FR 2 831 923 un procédé de régénération du filtre à particules d'un moteur à combustion interne.

Dans ce moteur, le carburant permettant de régénérer le filtre à particules peut être injecté soit dans les cylindres du moteur au cours d'une *« injection secondaire* », soit dans la ligne d'échappement du moteur via un « *dispositif d'injection »* dédié, selon les conditions de températures et de charge du moteur.

La première méthode d'injection dans les cylindres est utilisable seulement lorsque la température des gaz brûlés est supérieure à une première température seuil, de manière à assurer une bonne oxydation des gaz brûlés. La seconde méthode d'injection dans la ligne d'échappement est quant à elle utilisable seulement lorsque la température des gaz brûlés est supérieure, d'une part, à une seconde température seuil de manière à assurer une évaporation rapide du carburant, et, d'autre part, à une troisième température seuil de manière à assurer une bonne oxydation des gaz brûlés chargés en particules liquides de carburant.

Toutefois, si ces conditions de charge et de température ne sont pas réunies, il est prévu de ne pas injecter de carburant et de ne pas régénérer le filtre à particules, ce qui peut arriver en particulier lorsque le moteur fonctionne au ralenti et que ses gaz brûlés présentent une température réduite.

Le but de la présente invention est de remédier à cet inconvénient.

On atteint ce but de l'invention au moyen d'un procédé de régénération du filtre à particules placé sur la ligne d'échappement d'un moteur à combustion interne, dans lequel, pendant la régénération du filtre à particules, du carburant est injecté dans la ligne d'échappement en amont d'un catalyseur d'oxydation disposé en amont du filtre à particules. Selon l'invention, ce procédé est caractérisé en ce que pendant les phases de ralenti du moteur à combustion interne, on augmente la température à l'entrée du catalyseur d'oxydation pour éviter la condensation du carburant.

De préférence, on augmente la température à l'entrée du catalyseur d'oxydation qu'en cas de régénération du filtre à particules, c'est-à-dire dans la situation où du carburant est effectivement injecté dans la ligne d'échappement. On évite ainsi toute émission de fumées blanches malodorantes à l'échappement, après accélération du moteur à la suite d'un ralenti prolongé de celui-ci.

De préférence, lors des phases de ralenti du moteur on règle la température à la surface interne du tube d'échappement entre le point d'injection de carburant et l'entrée du catalyseur à une valeur supérieure à 360°C.

En effet, à partir de 360°C, la totalité du gasole s'évapore.

Dans la pratique, on règle ladite température à une valeur de l'ordre de 400°C.

La température des gaz d'échappement à l'entrée du catalyseur d'oxydation peut être réglée en modifiant les paramètres d'injection du moteur, en particulier le point d'injection et le débit de l'injection.

Selon un autre aspect, l'invention concerne un dispositif pour la mise en oeuvre du procédé de régénération du filtre à particules selon l'invention caractérisé en ce qu'il comprend un capteur de température placé dans la ligne d'échappement à l'entrée du catalyseur d'oxydation coopérant avec le calculateur de contrôle du fonctionnement du moteur à combustion interne pour régler la température des gaz d'échappement du moteur à l'entrée du catalyseur d'oxydation à une valeur supérieure à la température de condensation du carburant, lors des phases de ralenti du moteur.

De préférence, le calculateur est adapté pour commander une modification du réglage du système d'injection du moteur afin d'augmenter la température des gaz d'échappement à l'entrée du catalyseur d'oxydation, lors des phases de ralenti du moteur.

D'autres particularités et avantages de l'invention apparaîtront encore tout au long de la description ci-après.

On appelle « phase de ralenti du moteur » une période pendant laquelle le régime de ce moteur est inférieure à 1000 tr/min.

Aux dessins annexés, donnés à titre d'exemples, non limitatifs :
- la figure 1 est un schéma général d'un dispositif connu de régénération d'un filtre à particules,
- la figure 2 est un schéma général du système d'admission et d'échappement d'un moteur thermique diesel turbocompressé comportant le dispositif selon l'invention,
- la figure 3 montre une courbe d'évolution de la température du gasole en fonction de son taux d'évaporation,
- la figure 4 est une courbe montrant la température à l'entrée du catalyseur d'oxydation pendant la phase de ralenti du moteur et pendant la phase roulante du véhicule.

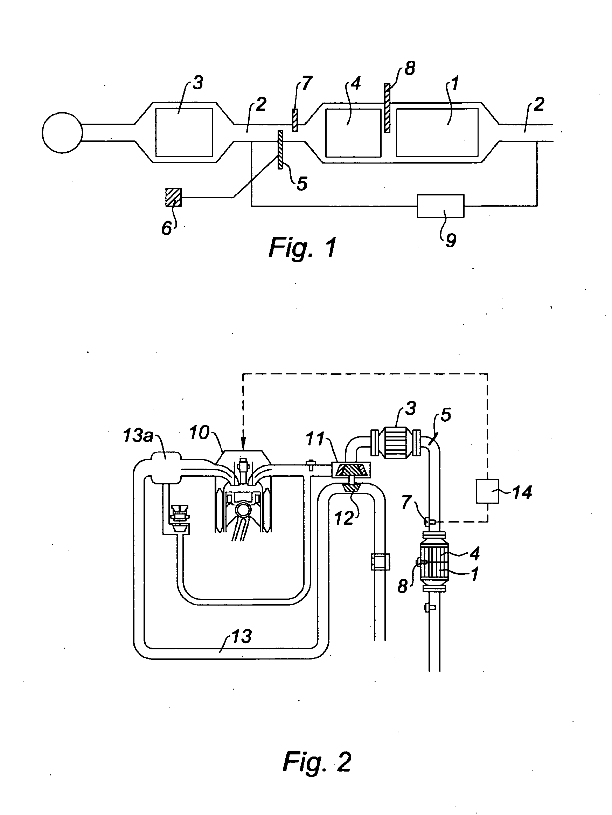

La figure 1 illustre schématiquement un dispositif de dépollution des gaz d'échappement d'un moteur thermique de type diesel, tel que décrit dans la demande de brevet français FR0453187 du 23 décembre 2004.

Ce dispositif comprend un filtre à particules 1 disposé sur la ligne d'échappement 2 du moteur thermique, sur laquelle sont placés, un premier catalyseur d'oxydation 3 situé près du moteur et un second catalyseur d'oxydation 4 situé juste en amont du filtre à particules 1.

En amont du second catalyseur d'oxydation 4, est placé un injecteur de gasole 5 relié à une pompe 6 qui permet d'injecter du gasole dans la ligne d'échappement 2 dont la combustion permet d'élever la température du catalyseur d'oxydation 4 pendant les phases de régénération du filtre à particules 1.

En amont du catalyseur 4 et entre celui-ci et le filtre 1 sont disposés des capteurs de température 7, 8.

La référence 9 désigne un capteur permettant de mesurer la pression différentielle entre l'entrée du catalyseur 4 et la sortie du filtre 1.

La régénération du filtre 1 est déclenchée lorsque la pression différentielle mesurée par le capteur 9 atteint un certain seuil. Dans ce cas, du gasole est injecté par l'injecteur 5 dans la ligne d'échappement. La combustion du gasole élève la température du catalyseur jusqu'à environ 650°C ce qui permet de brûler les particules de suie présentes dans le filtre 1.

La figure 2 représente un moteur diesel 10 comprenant un turbocompresseur 11 dont le compresseur 12 permet de comprimer l'air dans la tubulure d'admission 13 qui est reliée au collecteur d'admission 13a du moteur 10.

En aval du turbocompresseur 11, la ligne d'échappement 2 comprend le dispositif représenté sur la figure 1, à savoir successivement un premier catalyseur d'oxydation 3, un injecteur de gasole 5, un second catalyseur d'oxydation 4 et le filtre à particules 1. Un capteur de température 7 est disposé près de l'entrée du catalyseur d'oxydation 4.

Conformément à l'invention, lors des régénérations et en phase de ralenti du moteur 10, on augmente la température à l'entrée du catalyseur d'oxydation 4 pour éviter la condensation du gasole dans le filtre à particules 1 et l'émission de fumées blanches et malodorantes lors de l'accélération suivante du moteur.

De façon typique, lors des phases de ralenti du moteur, on règle la température à la surface interne du tube d'échappement entre le point d'injection de carburant et l'entrée du catalyseur à une valeur supérieure à 360°C. par exemple à une valeur de l'ordre de 400°C.

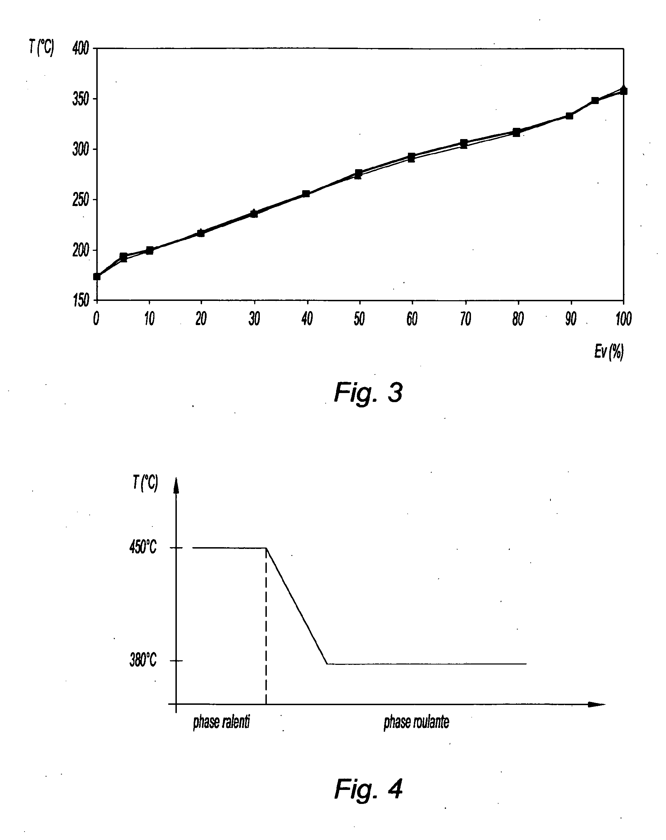

En effet, la courbe représentée sur la figure 3 montre qu'au-delà de 360°C, Ev(%) = 100%, ce qui veut dire que la totalité du gasole se vaporise.

Le procédé ci-dessus est illustré par la figure 4. Cette figure montre que pendant la phase de ralenti, la température T. (°C) à l'entrée du catalyseur d'oxydation 4 est réglée à 450°C. Cette température chute ensuite progressivement jusqu'à 380°C lorsque le véhicule entre de nouveau dans la phase roulante, le but étant de prendre en compte les pertes thermiques plus importantes lorsque le véhicule est au ralenti.

Le dispositif pour mettre en oeuvre le procédé décrit ci-dessus, comprend (voir figure 2) un capteur de température 7 placé à l'entrée du catalyseur d'oxydation 4 coopérant avec le calculateur 14 de contrôle du fonctionnement du moteur 10.

Ainsi, suivant la température mesurée par le capteur 7, le calculateur 14 est programmé pour commander une modification du système d'injection du moteur 10 afin de diminuer ou augmenter la température du gaz d'échappement à l'entrée du catalyseur d'oxydation 4.

Cette modification du système d'injection a pour effet de dégrader le rendement du moteur et peut consister d'une manière en elle-même connue de l'homme du métier à dérégler le point d'injection principale, le débit de post-injection rapprochée et le débit de post injection éloignée.

Ainsi pendant la phase de ralenti du moteur 10, la température de consigne à l'entrée du catalyseur d'oxydation 4 peut être réglée pour obtenir une température de l'ordre de 450°C pour éviter la condensation du gasole.

## Revendications

1. Procédé de régénération du filtre à particules (1) placé sur la ligne d'échappement (2) d'un moteur à combustion interne (10), dans lequel, pendant la régénération du filtre à particules (1), du carburant est injecté dans la ligne d'échappement (2) en amont d'un catalyseur d'oxydation (4) disposé en amont du filtre à particules (1), **caractérisé en ce que**, pendant les phases de ralenti du moteur à combustion interne (10), et en cas de régénération du filtre à particules, on augmente la température à l'entrée du catalyseur d'oxydation (4) pour éviter la condensation du carburant.

2. Procédé selon la revendication 1, **caractérisé en ce que** lors des phases de ralenti du moteur (10) on règle la température à la surface interne du tube d'échappement entre le point d'injection de carburant et l'entrée du catalyseur (4) à une valeur supérieure à 360°C

3. Procédé selon la revendication 2, **caractérisé en ce que** l'on règle ladite température à une valeur de l'ordre de 400°C.

4. Procédé selon l'une des revendications 1 à 3, **caractérisé en ce que** la température des gaz d'échappement à l'entrée du catalyseur d'oxydation (4) est réglée en modifiant les paramètres d'injection du moteur (10).

5. Dispositif pour la mise en oeuvre du procédé de régénération du filtre à particules (1) selon l'une des revendications 1 à 4, **caractérisé en ce qu'**il comprend un capteur de température (7) placé dans la ligne d'échappement (2) à l'entrée du catalyseur d'oxydation (4) coopérant avec le calculateur (14) de contrôle du fonctionnement du moteur à combustion interne (10) pour régler la température des gaz d'échappement du moteur à l'entrée du catalyseur d'oxydation (4) à une valeur supérieure à la température de condensation du carburant, lors des phases de ralenti du moteur (10) et en cas de régénération du filtre à particules.

6. Dispositif selon la revendication 5, **caractérisé en ce que** le calculateur (14) est adapté pour commander une modification du réglage du système d'injection du moteur (10) afin d'augmenter la température des gaz d'échappement à l'entrée du catalyseur d'oxydation (4), lors des phases de ralenti du moteur.

## Claims

1. Method for regenerating the particle filter (1) placed in the exhaust line (2) of an internal combustion engine (10), in which method, while the particle filter (1) is being regenerated, fuel is injected into the exhaust line (2) upstream of the oxidation catalytic converter (4) positioned upstream of the particle filter (1), **characterized in that**, during the phases when the internal combustion engine (10) is at idle, and if the particle filter is being regenerated, the temperature on the inlet side of the oxidation catalytic converter (4) is raised to prevent the fuel from condensing.

2. Method according to Claim 1, **characterized in that** during phases when the engine (10) is at idle, the temperature at the internal surface of the exhaust tube between the point of injection of fuel and the inlet to the catalytic converter (4) is set to a value in excess of 360°C.

3. Method according to Claim 2, **characterized in that** the said temperature is set to a value of the order of 400°C.

4. Method according to one of Claims 1 to 3, **characterized in that** the temperature of the exhaust gases on the inlet side of the oxidation catalytic converter (4) is set by altering the injection parameters of the engine (10).

5. Device for implementing the method for regenerating the particle filter (1) according to one of Claims 1 to 4, **characterized in that** it comprises a temperature sensor (7) positioned in the exhaust line (2) on the inlet side of the oxidation catalytic converter (4), collaborating with the internal combustion engine (10) management computer (10) to set the temperature of the engine exhaust gases on the inlet side of the oxidation catalytic converter (4) to a value higher than the temperature at which the fuel condenses, during phases when the engine (10) is at idle and if the particle filter is being regenerated.

6. Device according to Claim 5, **characterized in that** the computer (14) is able to command a change to the setting of the engine (10) injection system so as to increase the temperature of the exhaust gases on the inlet side of the oxidation catalytic converter (4) during phases when the engine is at idle.

## Patentansprüche

1. Verfahren zur Regeneration des in der Abgasleitung (2) einer Brennkraftmaschine (10) angeordneten Partikelfilters (1), wobei während der Regeneration des Partikelfilters (1) Kraftstoff in die Abgasleitung (2) stromaufseitig eines stromaufseitig des Partikelfilters (1) angeordneten Oxidationskatalysators (4) eingespritzt wird, **dadurch gekennzeichnet, dass** während der Verzögerungsphasen der Brennkraftmaschine (10) und im Fall einer Regeneration des Partikelfilters die Temperatur am Eingang des Oxidationskatalysators (4) erhöht wird, um die Kondensation des Kraftstoffs zu vermeiden.

2. Verfahren nach Anspruch 1, **dadurch gekennzeichnet, dass** in den Phasen der Verzögerung der Maschine (10) die Temperatur auf der inneren Oberfläche des Abgasrohrs zwischen dem Kraftstoffeinspritzpunkt und dem Eingang des Katalysators (4) auf einen Wert größer als 360 °C reguliert wird.

3. Verfahren nach Anspruch 2, **dadurch gekennzeichnet, dass** die Temperatur auf einen Wert in der Größenordnung von 400 °C reguliert wird.

4. Verfahren nach einem der Ansprüche 1 bis 3, **dadurch gekennzeichnet, dass** die Temperatur der Abgase am Eingang des Oxidationskatalysators (4) durch Modifizieren der Einspritzparameter der Maschine (10) reguliert wird.

5. Vorrichtung für die Ausführung des Verfahrens zur Regeneration des Partikelfilters (1) nach einem der Ansprüche 1 bis 4, **dadurch gekennzeichnet, dass** es einen Temperatursensor (7) umfasst, der in der Abgasleitung (2) am Eingang des Oxidationskatalysators (4) angeordnet ist und mit dem Steuerrechner (14) für den Betrieb der Brennkraftmaschine (10) zusammenwirkt, um in Verzögerungsphasen der Maschine (10) und im Fall der Regeneration des Partikelfilters die Temperatur der Abgase der Maschine am Eingang des Oxidationskatalysators (4) auf einen Wert größer als die Kondensationstemperatur des Kraftstoffs zu regulieren.

6. Vorrichtung nach Anspruch 5, **dadurch gekennzeichnet, dass** der Rechner (14) dazu ausgelegt ist, eine Modifikation der Regulierung des Einspritzsystems der Maschine (10) zu befehlen, um die Temperatur der Abgase am Eingang des Oxidationskatalysators (4) in Verzögerungsphasen der Maschine zu erhöhen.
